# EUROPEAN PATENT APPLICATION

(11) **EP 1 293 307 A2**
(43) Date of publication of application: **19.03.2003**
(21) Application number: 02015457.1
(22) Date of filing: 11.07.2002
(51) Int. Cl.: B25J 15/08, B23Q 7/04

(54) **Method and apparatus for operating a clamp in automatic manipulators**

(30) Priority: 11.07.2001 IT PI20010051
(71) Applicant: Studio Tecnico Commerciale Morelli & C. S.a.s., 51100 Pistoia PT (IT)
(72) Inventor: Giraldi, Vitaliano, 51032 Bottegone (IT); Morelli, Massimo, 51100 Pistoia (IT)
(74) Representative: Celestino, Marco

(57) **Abstract**

A method and a device for operating and controlling gripping hands (2) of an automatic apparatus, for gripping, positioning and unloading objects (24), for example cartoned products, wrapped of plastic or paper material, by a production and packaging line. For opening the hands (2), with precise motion within brief stroke ranges, the device provides a ballscrew (8) with symmetrical opening/closing movement by means of a motor (6) with controlled axis, whose angular positions correspond to a precise position of the hands (2). Where the objects (24) fed by a conveyor belt (26) are of different size the position of the hands (2) adapts with precision to the size of the object to manipulate. The motor (6), for example of brushless type, has controlled torque, whereby the rotation of the shaft (8) stops at a predetermined maximum torque, to avoid that an object with void spaces, for example a ox of pasta, is squeezed. The supports (3) of the hands (2) extend outside ending with hooks (10) to which are hinged pistons (11) that cause the rotation of the hands (2) when required. Once closed the hands (2) the device can pick up a pallet (25) by the hooks (10) operated by the same supports (3) through the rotation of the shaft (8).

## Description

### Field of the invention

The present invention relates to a device for operating and controlling a hand or clamp of a robot or other automatic apparatus for manipulation of objects.

In particular, the invention relates to a hand of a robot for loading onto pallets products that are cartoned or wrapped in plastic film or paper at the end of a production and packaging line.

### Description of the prior art

The use of robots in production processes for various applications is well known.

Palletization systems, in particular, are often equipped with robots having a many degrees of freedom wrist. To the wrist at least a gripping device is connected with clamps or "hands" for automatic positioning and stacking of objects.

The robots used for palletization of packages that come from automatic production lines are usually located in a palletization zone and can assist at the same time more conveyors of packages.

The robots, which are usually anthropomorphic, Cartesian or polar, work at a palletization speed according to the carrying capacity of the wrist, to the trajectories and to any additional actions to perform. Therefore, to improve the speed the hands of the robot must be light, so that the objects to manipulate are the main part of the load on the wrist. The gripping hands, furthermore, must grip and release the object with precision and quickly.

The mechanisms of the gripping hands, however, have some technical limits that affect the quality of the manipulation. In fact, the means for automatic opening or closing the hands are usually operated by pneumatic cylinders. For this reason:
- the hands have fixed opening/closing stroke independently from the size of the object to load; in particular, if the size range of the objects to manipulate varies much, for example for palletization of objects of different shape, when handling the objects of minimum size the hands must open like for objects of maximum size, thus effecting a long idle portion of the stroke before gripping the object;
- the gripping hands, in their opening/closing movement, push on the objects without a sufficient dampening, thus causing its deformation or break; this drawback is present mainly in presence of packages that have air inside, for example boxes of pasta, which cannot resist to the pressure of the gripping hands beyond certain limits;
- in case of accidental lack of air in the pneumatic actuators, the object can be released unintentionally, thus falling down and breaking as well as scattering the content.

A further problem is to supply palletization zones with empty pallets as the loaded pallets are carried away. Mechanical conveyors exist, that however involve relevant additional costs to the plant. On the other hand, the addition to a robot of additional mechanisms for picking up the pallet causes an increase of the weight on the articulations of the robot, with reduction of the speed.

### Summary of the invention

It is therefore object of the present invention to provide a device for operating and controlling gripping hands or clamps of an automatic apparatus for manipulation of objects, that does not present the drawbacks of the existing devices.

In particular, an object of the present invention is to provide such a device where the hands can open/close responsive to the size range of the objects to load, with precision, avoiding idle portions of the strokes.

It is also object of the present invention to provide a device for operating and controlling gripping hands or clamps which can be fixed to a palletization robot, which is enough light to allow agility and sufficient carrying capacity.

It is a further object of the invention to provide such a device that, in combination with the stroke ends of the hands, provides a system for handling and positioning automatically the empty pallets in the loading zone.

The invention that achieves these objects consists in a method for operating and controlling the gripping hands of an automatic apparatus suitable for gripping, positioning and unloading objects, for example cartoned products coming from an automatic production line. The method comprises the steps of: moving the hands at the object to handle and then opening the hands, closing the hands on the object, moving the object, and opening the hands for releasing the object. The method has the characteristic that the steps of opening and closing the hands follow a succession of single controlled movements, whereby it is possible a precise positioning of the hands with respect to the object. Furthermore, it is possible to adjust the torque of the hands thus adjusting instantaneously the pressure of the hands on the objects to handle. A similar operation can adjust the approaching/moving away speed and acceleration.

Preferably, the movement of opening and closing the hands on the object is made with at least a motor with controlled axis. The movement is obtained by said motor preferably through rotation of at least a shaft associated to said hands, whereby at each position of said shaft a different position of said hands corresponds. Preferably, said shaft rotates with control of the torque, whereby said movement stops if a predetermined maximum torque is reached.

Advantageously, the hands can be displaced both in a opening/closing direction with respect to the object, and in an orthogonal direction for adjusting the gripping width. Also in this case the movement is obtained by means of rotation of at least a second shaft associated to said hands, whereby at each position of said second shaft a different gripping width corresponds of said hands.

Preferably, the movement of opening and closing the hands is used also for opening and closing pallet gripping hooks that are external to the hands. In this case a step of rotation is provided of the hands to a position of minimum encumbrance for freeing the space between said hooks and allowing to grip and release the pallet by the hooks.

Advantageously, the hands and the hooks move integrally, whereby when the hands are open they can grip or release an object, whereas when the hands are closed the hooks can grip or release a pallet.

According to another aspect of the invention, a device for operating and controlling the gripping hands of an automatic apparatus suitable for gripping, positioning and unloading objects, for example cartoned products coming from an automatic production line, comprises:
- means for supporting the gripping hands;
- means for moving the means for supporting in a direction of mutual and symmetrical approaching/moving away of the hands with respect to at least an object which, in use, is located between them;
- means for transmission of the movement to said means for moving,
its characteristic being that said means for transmission of the movement are associated to at least a motor with controlled axis whereby at each position of said axis a position univocally corresponds of said hands according to a succession of single controlled movements.

Preferably, said motor is to torque controlled, whereby said movement stops if a predetermined maximum torque is reached.

Advantageously, the device comprises two couples of hands connected to orthogonal sliding guides, whereby they can be displaced both in an opening/closure direction with respect to the object, and in an orthogonal direction for adjusting the gripping width, the following being provided:
- second means for moving the means for sliding in said orthogonal direction;
- second means for transmission of the movement to said second means for moving associated to at least a second motor with controlled axis, at each position of the axis of said second motor a different gripping width of said hands corresponding, thus distancing or approaching the first couple of hands with respect the second.

Preferably, the means for supporting the gripping hands are integral to hooks that are external to the hands for gripping a pallet, means being provided for rotating the hands to a position of minimum encumbrance for freeing the space between said hooks and allowing to grip said pallet.

Advantageously, means are provided for controlling the means for transmission of the movement by means of control of the rotation of the motor axis following a predetermined function movement/time.

The means for moving comprise a shaft with at least a screw portion that engages a nut screw made in said supports. Preferably, for symmetrical movement of two opposed hands, the shaft has a first screw threaded portion that engages with the support of a first hand having thread with opposite inclination with respect to a second screw threaded portion that engages with the support of the second hand, whereby a rotation in a direction of the shaft causes a symmetrical approaching of the hands and the rotation in an opposite direction causes the hands to move away symmetrically.

Also the second means for moving can comprise a shaft with at least a screw portion that engages a nut screw made in the means for moving the hands. Preferably, for symmetrical variation of the gripping width of two couples of hands, the shaft has a first screw threaded portion that engages with the means for moving a first couple of hands having thread with opposite inclination with respect to a second screw threaded portion that engages with the means for moving the second couple of hands; this way a rotation in a direction of the shaft causes the symmetrical approach of the two couples of hands and the rotation in an opposite direction causes the two couples of hands to move away symmetrically.

Furthermore, the means for gripping the pallet are levers that are positioned by the same supports of the hands along the sliding guides.

Finally, the use is provided of at least a safety piston that pushes from the above towards below assuring the release of the object, avoiding that the object is jammed and released in a not desired later moment thus falling down and breaking as well as scattering the content.

Advantageously suction cups are provided suitable for gripping sheets to be arranged between two layers of objects.

### Brief description of the drawings

Further characteristics and advantages of the device for operating a clamp in an automatic manipulator according to the present invention, will be made clearer with the following description of an embodiment thereof, exemplifying but not limitative, with reference to the attached drawings wherein:
- figures 1 and 2 show a front and side elevational view of the device according to the invention;
- figures from 3A to 3D, show different operative steps of the device of figures 1 and 2 from picking up the object to depositing it on the pallet;
- figure 4 shows a top plan view of a palletization zone assisted by a robot that uses the device of figures 1 and 2 as element of manipulation;

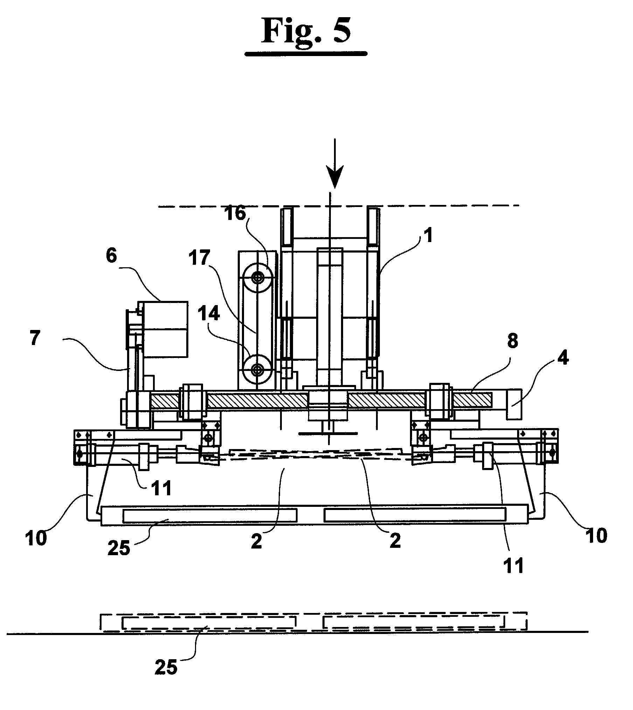

- figure 5 shows the steps of gripping and releasing a pallet by the device according to the invention.

### Description of a preferred embodiment

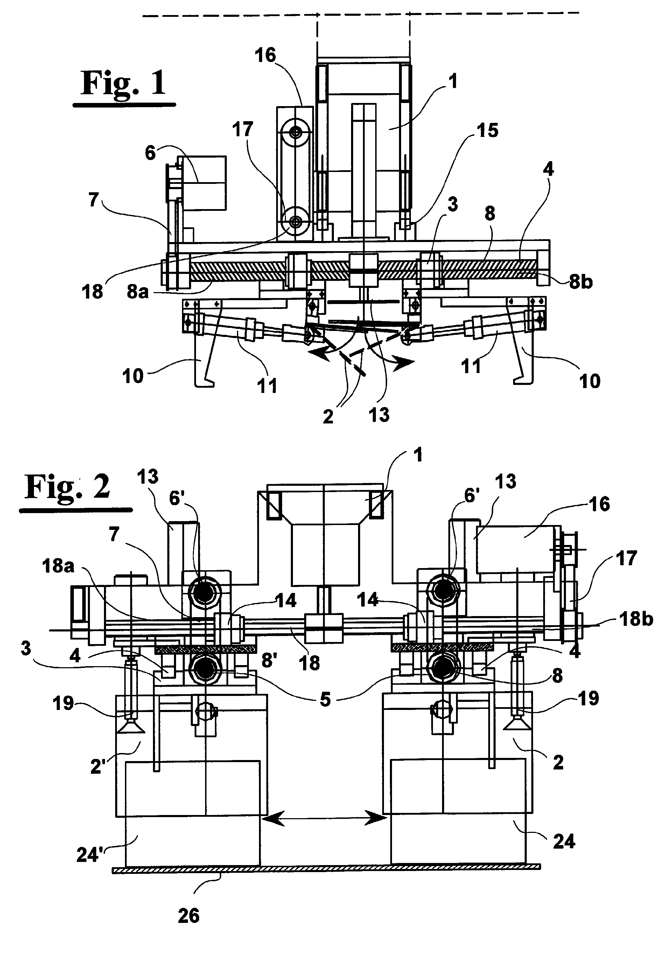

With reference to figures 1 and 2, a device according to the invention operates and controls hands 2, 2'. The body 1 of the device is connected in a way not shown to the wrist of a robot and comprises supports 3 that slide on guide 4. The supports 3 have a nut screw 5 that engages on a screw threaded shaft 8 brought into rotation by means of a transmission 7 by a servomotor 6. The shaft 8, which preferably is a ballscrew, has screw threaded portions 8a and 8b with opposite threads, whereby at each rotation the supports 3 move approaching or moving away symmetrically with respect to each other.

The hands 2 are pivotally connected to the supports 3, in order to rotate as shown in figure 1 from a position where they are substantially coplanar to a position where they are parallel and facing each other. The supports 3 extend towards outside ending with hooks 10. To hooks 10 are hinged pistons 11 that cause hands 2 to rotate when required.

To couple of hands 2 of figure 1 another couple of alike hands 2' corresponds, shown in figure 2, adjacent to hands 2. Furthermore, guides 4 are suspended on slides 14 which move on second guides 15. Such slides 14 have a nut screw that engages on a second screw threaded shaft 18 having screw threaded portions 18a and 18b that are opposite so that it is possible a symmetrical movement of the couples of hands 2' and 2. A motor 16 is provided that by means of a transmission 17 brings into rotation shaft 18.

Are furthermore provided safety pistons 13 that push from the above towards below for ejection of the object present between the couples of hands 2 and 2'. In a way not shown, are also present suction cups 19 for picking up and releasing a sheet to be arranged on a level of palletized objects before stacking another level.

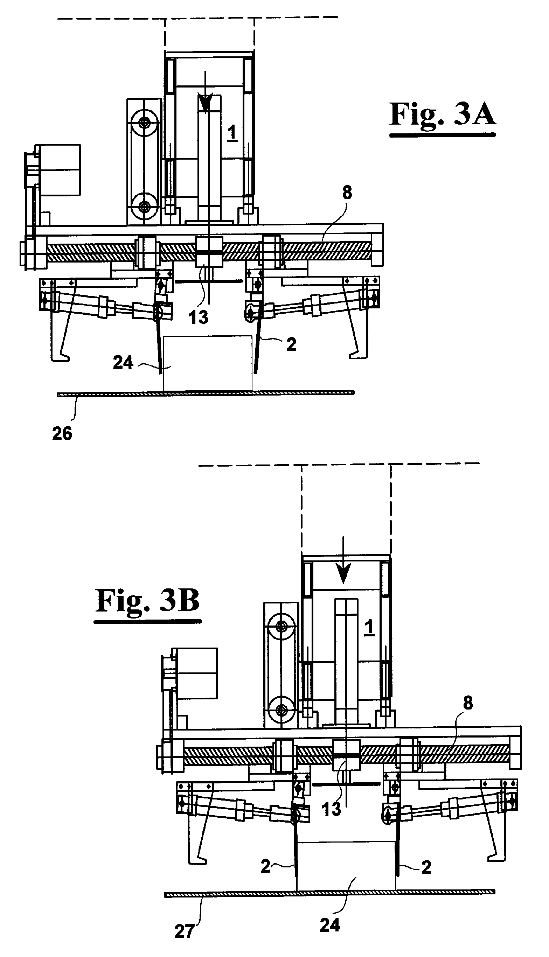

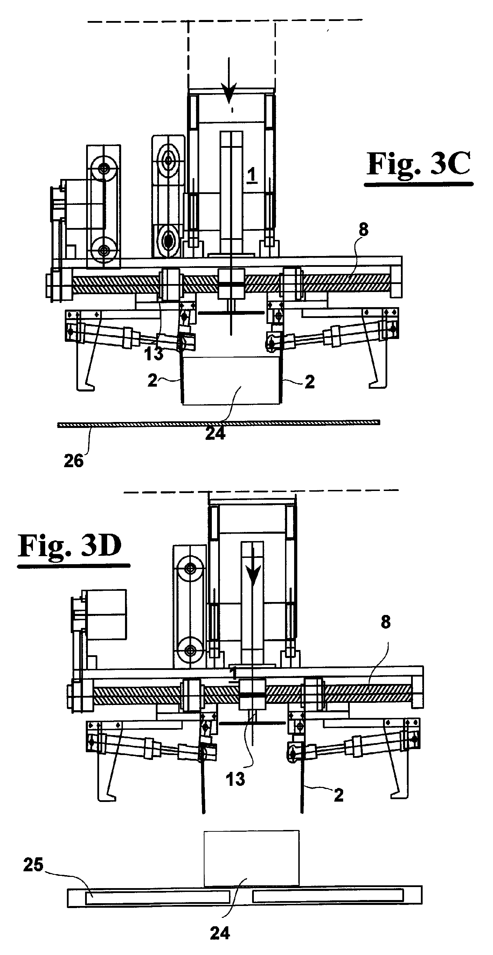

The main characteristic of the device according to the invention is that hands 2, 2' can close very easily and according to the size range of the objects 24 to load (figure 3A-3D).

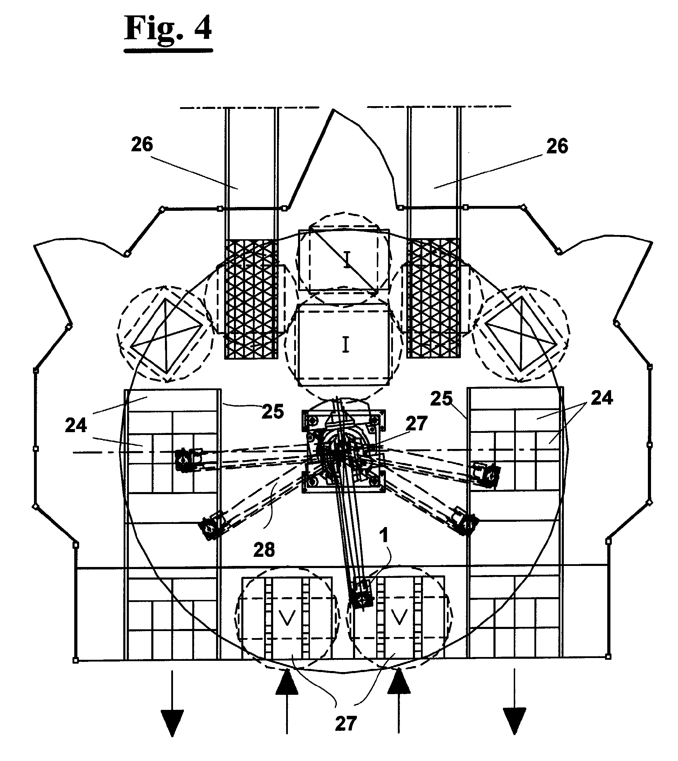

With reference also to figure 4, the objects 24 to load on a pallet 25, usually, are located on a conveyor belt 26 which, brings them to the radius of action of a robot 27, which is equipped with an articulated arm 28, which must pick up an object 24 and position it correctly onto the pallet 25.

For opening the hands 2, precisely and quickly, the device 1 provides ballscrew 8 with symmetrical opening/closing movement with controlled axis position. In other words, at each position of rotation of shaft 8, controlled by motor 6, a precise position corresponds of hands 2, 2'. This advantage is particularly effective when the objects 24, which slide on conveyor belt 26, are of different size, where the position of the hands 2 adapts with precision to the size of the object to manipulate. Motor 6, for example of brushless type, has a controlled torque, so that the rotation of the shaft 8 stops beyond a predetermined maximum torque, sufficient to avoid that an object with void space inside, for example packages of pasta, is squeezed.

The advantageous presence of two couples of hands 2, 2' allows to pick up more objects 24 at a time from the conveyor belt. Therefore, if on the conveyor belt two objects 24, 24' are present, the two couples of hands 2, 2', by screw threaded shaft 18 that is brought into rotation by motor 16, are adjusted at a distance such that the objects are picked up centred. The robot, then, positions the body 1 so that the hands 2, 2' engage object 24 (figure 3A), whose size is known for example from a previous automatic measure done along the production line. The precise position of the hands 2 is adjusted by the rotation of the shaft 8 by motor 6. If the two objects 24, 24' ready to be picked up have different size, the width of the two couples of hands 2, 2' is adjusted by motors 6, 6' and rods 8,8'. Once drawn the objects 24,24', the two couples of hands 2 and 2', approach to each other in order to release the objects 24,24' adjacent to each other on pallet 25.

Safety pistons 13, figures 1 and 2, pushing from the above towards assure the release on the pallet 25 of the object 24, avoiding that it can remain between the hands 2 and then fall down in an undesired moment.

The positioning of the pallet 25 can be made automatically always by the device according to the invention. When a pallet is fully loaded, it is drawn and in the meantime the device according to the invention is brought above a stack of empty pallets. Pistons 11 are moved in order to rotate (figure 1) hands 2 to a position of minimum encumbrance, so that the space between the hooks 10 is freed. Then, the device 1 draws a pallet 25 positioning it in a loading zone. This is done by the hooks 10 operated by the same supports 3 through the rotation of shaft 8. Once arranged the pallet 25 in the loading position, the arm 28 of robot 27 moves towards the conveyor belt 26, on which are present the objects 24 to load. In the meantime, hands 2 (figure 1) are open again by pistons 11.

The device according to the invention, with movements of the hands completely operated by mechanical means, has the considerable advantage of assuring the position of the hands both in opening/closing movement and in moving away/approaching, and also its speed and acceleration can be adjusted. The limited number of mechanical elements and of motors allows to obtain a device relatively light, so that a carrying capacity is reached that does not affect the agility of the robot.

A further advantage of the device is the possibility to picking up paper or plastic sheets of various thickness and of different sizes and releasing them on the pallet, to stabilize the loaded pallet. This function is made with suction cups sucking not shown, mounted on pistons having a stroke relatively brief owing to the rotation of the hands as above described.

The brief stroke with a single piston allows to reach a maximum approaching speed and gripping effectiveness in addition to a considerable reliability owing to a reduction flexibility of the piston rods under combined bending and compressive stress.

The pistons, being mounted on slides, can adjust their working range increasing remarkably the reliability of the system when handling sheets, with optimisation of the position of the suction cups.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A method for operating and controlling the gripping hands of an automatic apparatus for gripping, positioning and unloading objects from a production and packaging line, for example cartoned products wrapped with plastic or paper material, comprising the steps of:
- moving the hands at the object to handle and then opening the hands,
- closing the hands on the object,
- displacing the object,
- opening the hands for releasing the object,
**characterised in that**
the steps of closing and opening the hands follow a succession of single controlled movements, whereby a precise positioning is possible of the hands with respect to the object, as well as approaching/moving away speed and acceleration adjustment of the hands with respect to the object and pressure adjustment of contact on the object.

2. Method according to claim 1, wherein said movement of opening and closing the hands on the object is made with at least a motor with controlled axis, said movement being obtained by rotation through said motor of at least a shaft associated to said hands, whereby at each position of said shaft a position of said hands corresponds.

3. Method according to claim 1, wherein said hands are positioned both in a opening/closure direction with respect to the object and in an orthogonal direction for adjusting the gripping width, the adjustment of the gripping width being obtained by rotation of at least a second shaft associated to said hands, whereby at each position of said second shaft a different gripping width corresponds of said hands.

4. Method according to claim 1, wherein said movement of opening and closing the hands is used for opening and closing pallet gripping hooks that are external to the hands, a step of rotation of the hands being provided to a position of minimum encumbrance for freeing the space between said hooks and allowing to grip and release the pallet.

5. A device for operating and controlling the gripping hands of an automatic apparatus suitable for gripping, positioning and unloading objects, for example cartoned products, wrapped of plastic or paper material, by a production and packaging line, comprising:
- means for supporting the gripping hands;
- means for moving the means for supporting on sliding guides in a mutual and symmetrical approaching/ moving away direction of the hands with respect to at least an object which, in use, is located between them;
- means for transmission of the movement to said means for moving,
**characterised in that**
said means for transmission of the movement operate according to a succession of single controlled movements, whereby it is possible a precise positioning of the hands with respect to the object, as well as approaching/ moving away speed and acceleration adjustment of the hands with respect to the object and contact pressure adjustment on the object.

6. Device according to claim 5, wherein said means for transmission of the movement are associated to at least a motor with controlled axis, whereby at each position of said motor a position univocally corresponds of said hands according to a succession of single controlled movements.

7. Device according to claim 5, wherein at least two couples of hands are provided and said means for moving the means for supporting are in turn associated to second sliding guides orthogonal to said sliding guides, whereby the hands can be displaced both in a opening/closure direction with respect to the object, and in an orthogonal direction for adjusting the gripping width, the following being also provided:
- second means for moving the sliding guides in said orthogonal direction;
- second means for transmission of the movement to said second means for moving associated to at least a second motor with controlled axis, at each position of the shaft of said second motor a different gripping width of said hands corresponding, distancing or approaching the first couple of hands with respect the second.

8. Device according to claim 5, wherein said means for supporting the gripping hands are integral to hooks for gripping a pallet that are external to the hands, means being provided for rotating the hands to a position of minimum encumbrance for freeing the space between said hooks and allowing to grip said pallet.

9. Device according to claim 5, wherein means for gripping the pallet are provided comprising levers that are actuated by the supports of the hands when the hands reach a limit stop along the means for sliding.

10. Device according to claim 5, wherein means are provided for controlling the means for transmission of the movement by controlling the rotation of the shaft following a predetermined function movement/time.

11. Device according to claim 5, wherein said means for moving comprise a shaft with at least a screw portion that engages a nut screw made in said supports.

12. Device according to claim 5, wherein, for symmetrical movement of two opposed hands, the shaft has a first screw threaded portion that engages with the support of a first hand, said first screw threaded portion having thread with opposite inclination with respect to a second screw threaded portion that engages with the support of the second hand, whereby a rotation in a direction of the shaft causes a symmetrical approaching of the hands and the rotation in an opposite direction causes the hands to move away symmetrically.

13. Device according to claim 6, wherein said second means for moving comprise a second shaft with at least a screw portion that engages a nut screw made in said means for sliding.

14. Device according to claim 11, wherein, for symmetrical variation of the gripping width of two adjacent couples of hands, said second shaft has a first screw threaded portion that engages with the means for moving a first couple of hands, said first screw threaded portion having thread with opposite inclination with respect to a second screw threaded portion that engages with the means for moving the second couple of hands, whereby a rotation in a direction of the shaft causes the symmetrical approach of the two couples of hands and the rotation in an opposite direction causes the two couples of hands to move away symmetrically.
